## Europäisches Patentamt

## European Patent Office

## Office européen des brevets

(11) Veröffentlichungsnummer: **0 127 011**
**B1**

(12) **EUROPÄISCHE PATENTSCHRIFT**

(45) Veröffentlichungstag der Patentschrift:
03.09.86

(21) Anmeldenummer: **84105022.2**

(22) Anmeldetag: **04.05.84**

(51) Int. Cl.⁴: **E 05 D 7/10,** B 62 D 33/02

(54) Scharnier mit Aushängesicherung.

(30) Priorität: **20.05.83 DE 3318404**

(43) Veröffentlichungstag der Anmeldung:
**05.12.84 Patentblatt 84/49**

(45) Bekanntmachung des Hinweises auf die Patenterteilung:
**03.09.86 Patentblatt 86/36**

(84) Benannte Vertragsstaaten:
**AT CH DE FR GB IT LI NL SE**

(56) Entgegenhaltungen:
**DE-A-2 628 951**
**GB-A-795 881**
**NL-C-35 895**

(73) Patentinhaber: **Carl Sülberg GmbH & Co.,
Waldhofstrasse 2, D-5630 Remscheid 13 (DE)**

(72) Erfinder: **Könen, Karl- Heinz, Hindenburgstrasse
110, D-5630 Remscheid (DE)**

(74) Vertreter: **Kosel, Peter, Dipl.- Ing., Patentanwälte
Dipl.- Inge. Röse, Kosel & Sobisch Odastrasse
4a Postfach 129, D-3353 Bad Gandersheim 1 (DE)**

LIBER, STOCKHOLM 1986

## Beschreibung

Die Erfindung betrifft ein Scharnier gemäß dem Oberbegriff des Patentanspruchs 1.

Bei derartigen Scharnieren besteht eine wesentliche Anforderung darin, daß die jeweilige Bordwand im hochgeschwenkten Zustand gegenüber einem unbefugten Aushängen gesichert ist. Dies spielt beispielsweise dann eine Rolle, wenn das zugehörige Nutzfahrzeug im Transitverkehr mit verplombtem Laderaum eingesetzt ist, wobei Veränderungen am Ladegut verhindert werden müssen. Weiterhin müssen derartige Scharniere eine gefahrlose Handhabung, insbesondere bei dem Einhängen und Aushängen der Bordwand ermöglichen.

Bei einem bekannten zweiteiligen Scharnier der eingangs genannten Art (DE-Gebrauchsmusterschrift 82 22 340) bildet dessen am Fahrzeug befestigtes Unterteil eine nach oben und in axialer Richtung beidseitig offene Lagerschale, in welche eine beidseitig in Seitenwänden eines Oberteils gehaltene Drehachse eingesetzt ist. Die Seitenwände des Oberteils bilden somit eine Sicherung gegen axiales Verschieben des Oberteils des Scharniers. Die Lagerschale des Unterteils weist in ihrem mittleren Bereich einen senkrechten Schlitz auf, der sich vom vorderen Teil derselben mit gleichbleibender Breite über den unteren bis in den hinteren Teil erstreckt. Dieser Schlitz dient is eingehängten Zustand der Bordwand im Zusammenwirken mit einer auf der Drehachse befestigten Scheibe der Sicherung gegenüber einem unbefugten Ausheben der Bordwand. Zum Aushängen der Bordwand muß diese um 180° nach unten geschwenkt und anschließend aus der Lagerschale ausgehoben werden. Dieses Ausheben ist möglich, weil sich in dieser Stellung der Bordwand die Scheibe dank einer einseitigen sekantenartigen Abflachung außer Eingriff mit dem Schlitz befindet. Das Aushängen einer Bordwand ist bei diesem bekannten Scharnier somit durch zwei Bewegungen charakterisiert, nämlich das Herunterschwenken der Bordwand und dss anschließende Ausheben aus der Lagerschale. Nachteilig ist hierbei, daß die heruntergeschwenkte Bordwand unkontrolliert aus den Lagerschalen ausgehoben werden und abfallen kann. Dies kann z.B. beim Rangieren geschehen, wenn die herabhängende Bordwand auf einen Widerstand aufläuft.

Ähnliche Nachteile weist das aus der DE-Gebrauchsmusterschrift 75 01 762 an sich bekannte Scharnier auf. Hierbei sind am Fahrzeugchassis in seitlichem Abstand voneinander zwei aus Blech gestanzte Lagerböcke befestigt, die jeweils eine nach oben offene Lagerschale bilden. In diese Lagerschalen ist ein an einen aus Blech gestanzten Bügel angeschweißter Lagerbolzen mit über den Bügel hinausragenden Fortsätzen eingesetzt. Jeder Fortsatz weist einseitig eine Abflachung auf, die im Zusammenwirken mit der Kontur der Lagerausnehmungen der erwähnten Lagerböcke zwar ein Herausheben der jeweiligen Bordwand im hochgeschwenkten Zustand verhindert, jedoch ein unkontrolliertes Aushängen in der heruntergeschwenkten Stellung ermöglicht.

Aus der DE-Patentschrift 27 48 185 ist ein zweiteiliges Scharnier bekannt, dessen Unterteil sm Chassis eines Fahrzeugs und dessen Oberteil an der jeweiligen Bordwand befestigt ist. Das Unterteil weist eine nach oben offene Lagerschale auf, die in axialer Richtung einseitig verschlossen ist und in die ein am Oberteil befestigter Drehzapfen eingesetzt ist, durch den die Schwenkachse des Scharniers definiert ist. Mit dieser Schwenkachse fluchtend befindet sich am Unterteil auf der geschlossenen Seite der Lagerschale eine Achse, die im hochgeschwenkten Zustand der Bordwand von einem, am Oberteil befestigten Haken untergriffen wird. Ein den Drehzapfen tragender, an das Oberteil angesetzter Block und dieser Haken verhindern gemeinsam ein axiales Verschieben der Bordwand, während ein Ausheben letzterer im hochgeschwenkten Zustand durch den die erwähnte Achse am Unterteil hintergreifenden Haken verhindert wird. Von Nachteil ist bei diesem Scharnier, daß beim Herunterschwenken der Bordwand schon nach einem verhältnismäßig kleinen Schwenkwinkel der Haken die Achse nicht mehr untergreift und von dieser Stellung an ein unabsichtliches Aushängen der Bordwand möglich ist.

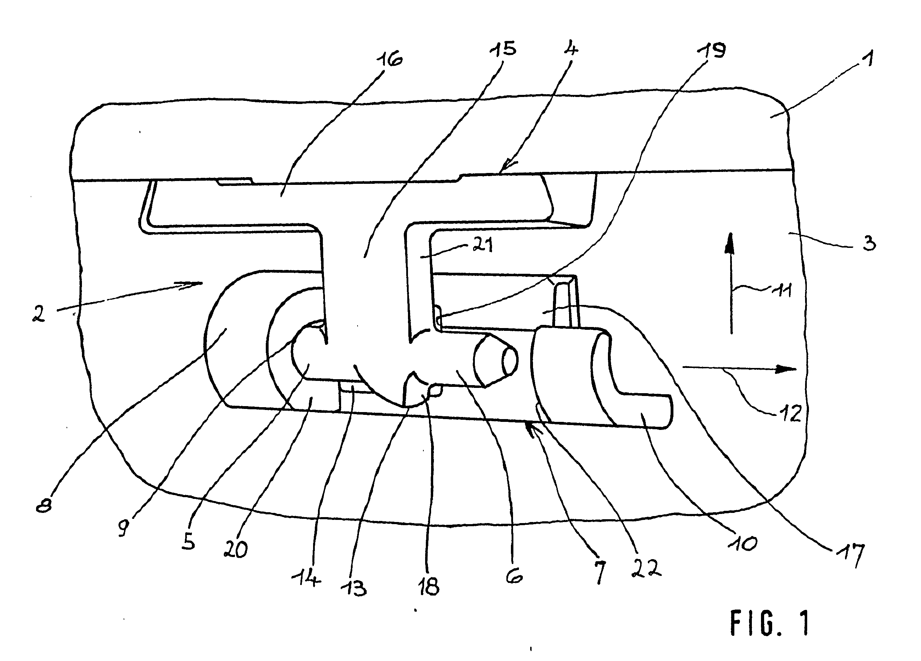

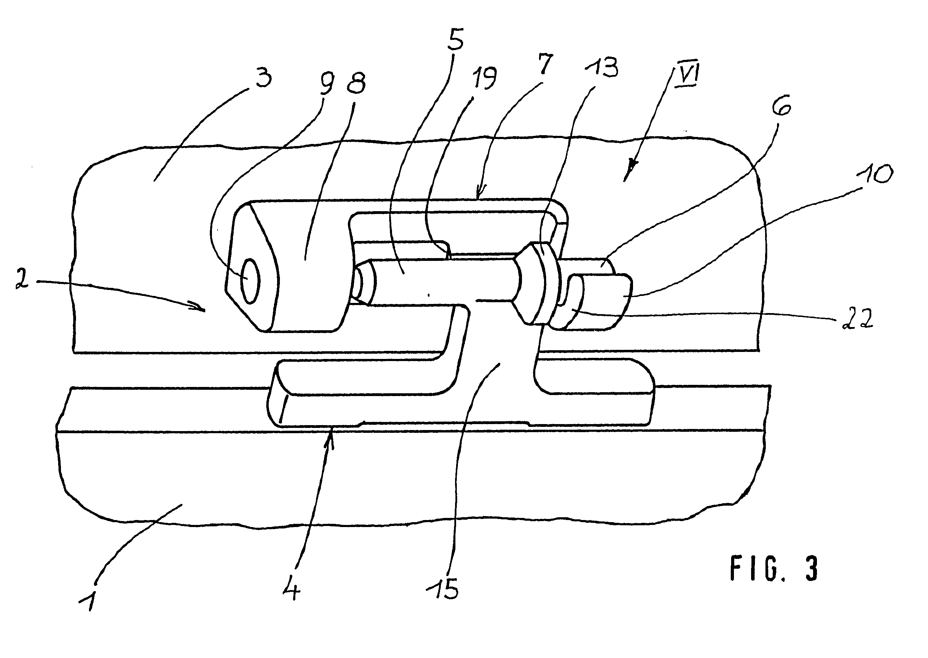

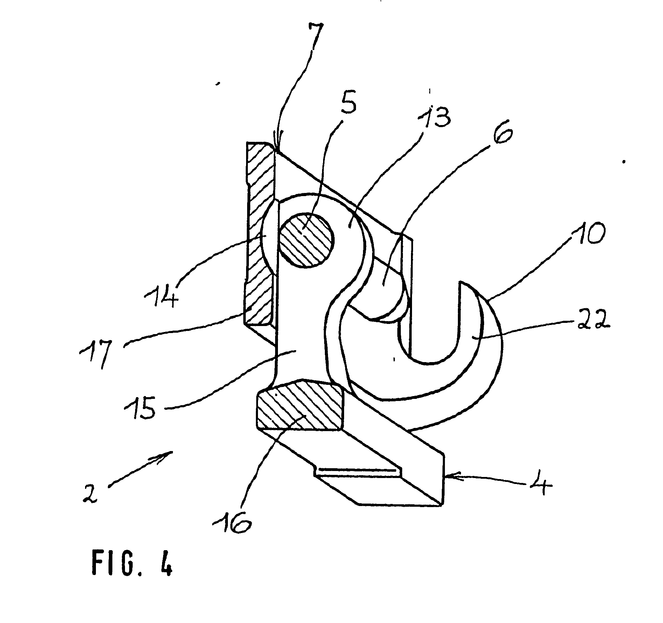

Aus der GB-A-795 881 ist ein Bordwandscharnier für Nutzfahrzeige an sich bekannt, bei dem der erste Scharnierteil 9 mit dem Schwenkzapfen 11 am Chassis 5 befestigt ist, während der zweite, eine Buchse 13 aufweisende Scharnierteil 13 bis 15 an der Bordwand 7 befestigt ist. Der erste Teil 9 trägt einen Bolzen 12 mit pilzförmigem Kopf, der mit zwei einander diametral gegenüberliegenden Ansätzen 14 der Buchse 13 in zwei Schwenkwinkelbereichen der Bordwand 7 zusammenwirkt, um eine axiale Verschiebung der Buchse 13 auf dem Schwenkzapfen 11 zu verhindern (Fig. 1, 2 und 4). Nur zwischen diesen beiden Schwenkwinkelbereichen, wenn die Bordwand waagerecht abgeklappt ist (Fig. 3), kann die Bordwand 7 axial verschoben und schließlich abgenommen werden. Diese waagerechte Abnahme bzw. Wiederansetzstellung der Bordwand 7 ist ungünstig, weil sie vom Bedienungsmann verhältnismäßig großen Kraftaufwand erfordert. Insbesondere beim Wiederansetzen sind ferner wegen des großen seitlichen Abstands des Bedienungsmannes vom Scharnierbereich die Einsicht in den Scharnierbereich und das "Einfädeln" der Scharniere erschwert. Die Betriebssicherheit ist unzureichend, weil die Bordwand 7, sobald die Buchsen 13 von den Schwenkzapfen 11 abgezogen worden sind, durch nichts gehalten wird. Auch ist die Zollsicherheit unzureichend, weil eine am Chassis 5 befestigte Seitenschwelle 6 die Einsichtnahme behindert.

Aus der NL-C-35 895 ist ein Dachfenster mit einem stationären Fensterrahmen 2 und einem daran durch zwei Scharniere 8, 4; 9, 5 anlenkbaren Flügelrahmen 3 an sich bekannt. Eine 9 der am Fensterrahmen 2 befestigten Scharnierbuchsen 8; 9 weist an ihrer der anderen Scharnierbuchse 8 zugewandten Seite einen Fuß 13 auf, der mit einem Nocken 12 an dem einen 5 der beiden zwischen den Scharnierbuchsen 8; 9 angeordneten, am Flügelrahmen 3 befestigten Zapfenteile 4; 5 zusammenwirkt. So läßt sich der Flügelrahmen 3 nur in einer besonders weit aufgeschwenkten Stellung nach Axialverschiebung abnehmen oder ansetzen. Das den Nocken 12 tragende Zapfenteil 5 weist nur einen verhältnismäßig langen Schwenkzapfen 7 und das andere Zapfenteil 4 nur einen kurzen Schwenkzapfen 6 auf. Zwischen dem längeren Schwenkzapfen 7 und seiner Scharnierbuchse 9 ist ein verhältnismäßig großes Spiel erforderlich, um die zum Abnehmen und Ansetzen des Flügelrahmens 3 erforderliche zusätzliche Schwenkbewegung des Flügelrahmens 3 um eine Hochachse zu ermöglichen.

Aus der DE-Offenlegungsschrift 26 28 951 ist ein aushängbares Türscharnier, insbesondere für Kraftfahrzeuge, mit senkrechter Scharnierachse an sich bekannt. Ein oberes Gewerbeteil trägt einen die Scharnierachse definierenden unten kugeligen Scharnierzapfen, der in eine kalottenförmige Ausnehmung in einem unteren Gewerbeteil eingreift. Eine Aushängesicherung ist durch einen radial ausladenden Sicherungsflügel am oberen Gewerbeteil gebildet, der in eine Schlitzausnehmung in dem anderen Scharnierflügel eingreift. Der Sicherungsflügel ist konzentrisch mit dem Scharnierzapfen, umgibt diesen aber nur teilweise. Nachteilig ist, daß das Türblatt unbeabsichtigt ausgehängt werden kann, sobald der Sicherungsflügel die Schlitzausnehmung verlassen hat.

Der Erfindung liegt die Aufgabe zugrunde, ein Scharnier der eingangs bezeichneten Art derart auszugestalten, daß bei einer ausreichenden Sicherung gegenüber einem unbefugten Aushängen der hochgeschwenkten Bordwand auch eine einfache und gefahrlose Handhabung derselben möglich ist.

Diese Aufgabe ist vor allem durch die Merkmale des Kennzeichnungsteiles des Anspruchs 1 gelöst. Auf diese Weise wird eine zuverlässige allseitige Fixierung der Bordwand erreicht, wobei die Anordnung des ersten Schwenkzapfens in der Bohrung insbesondere einem unbefugten vertikalen Ausheben der hochgeschwenkten Bordwand entgegenwirkt. Evtl. unzulässige Manipulationen an dem Scharnier sind für die Zollbeamten mühelos erkennbar. Eine bezüglich der Längsachsen der Schwenkzapfen axiale Arretierung der Bordwand besteht in deren hochgeschwenkter Stellung und in einem wählbaren Schwenkwinkelbereich abwärts von z.B. 145°. Über diesen Schwenkwinkelbereich hinaus läßt die Bordwand sich in einem von dem jeweiligen Fahrzeugtyp abhängigen weiteren Winkelbereich axial verschieben, bis der erste Schwenkzapfen die Bohrung verlassen und der zweite Schwenkzapfen sich in die Schale geschoben hat. Erst danach ist es möglich, die Bordwand aus den Schalen nach oben hin auszuheben. Mit der Axialverschiebung ist in die Bewegungsfolge zum Aushängen einer Bordwand bewußt unter zweifacher rechtwinkliger Änderung der Bewegungsrichtung eine "Schikane" eingebaut worden, die unbeabsichtigtes, gefährdendes Aushängen der Bordwand mit sehr großer Wahrscheinlichkeit ausschließt. Die Teile des Scharniers können zur Erzielung einer hohen Festigkeit und Robustheit geschmiedet oder gegossen und durch Schraubung oder Nietung oder Schweißung mit der Bordwand bzw. dem Fahrzeugchassis verbunden werden.

Die miteinander fluchtende Anordnung der Schwenkzapfen gemäß dem Anspruch 2 vereinfacht die Geometrie zumindest des an der Bordwand des Fahrzeugs befestigten ersten Teils des Scharniers und bringt darüberhinaus den Vorzug mit sich, daß bei einer Schwenkung der Bordwand und Lösung deren axialer Arretierung dem zweiten Schwenkzapfen in jeder Winkelstellung die nach oben offene Schale des zweiten Teils des Scharniers gegenübersteht, so daß in allen Winkelstellungen diese Schale in einfacher Weise ihre Haltefunktion erfüllen kann.

Mit den Merkmalen des Anspruchs 3 läßt sich die relative axiale Fixierung der Teile des Scharniers in dem gewählten Schwenkwinkelbereich der Bordwand einfach realisieren. Durch Variierung der Länge des Umfangs des Bundes kann der Schwenkwinkelbereich beliebig festgelegt werden, nach dessen Überschreiten eine axiale Verschiebemöglichkeit der Bordwand gegeben ist.

Die Merkmale des Anspruchs 4 sind konstruktiv besonders günstig.

Gemäß Anspruch 5 ergibt sich eine materialsparende Konstruktion hoher Festigkeit für das erste Teil des Scharniers.

Die Merkmale des Anspruchs 6 bringen den Vorteil mit sich, daß der Steg - in axialer Richtung gesehen - zusätzlich zu dem Bund eine Anschlagfläche für das erste Teil gegenüber der nach oben offenen Schale bei axialer Verschiebung bildet.

Die Merkmale des Anspruchs 7 ermöglichen es, daß der Steg gleichzeitig eine Anschlagfläche für das erste Teil des Scharniers bei dessen Bewegung in Richtung auf die den ersten Schwenkzapfen aufnehmenden Bohrung bildet. Das erste Teil ist auf diese Weise axial beidseitig fixiert, wenn sich der Bund in der Ausnehmung befindet.

Durch die Ausgestaltung des Scharniers gemäß Anspruch 8 ist sichergestellt, daß bei axialer Verschiebung des ersten Teils und damit der Bordwand gegenüber dem zweiten Teil ein Herunterfallen der Bordwand ausgeschlossen ist.

Gleichzeitig wird erreicht, daß der mit der Bohrung zusammenwirkende erste Schwenkzapfen vollständig aus der Bohrung herausgezogen werden kann. Nach dem vorherbestimmten Schwenkwinkelbereich und dem seitlichen Verschieben wird die Bordwand schließlich nur noch von den Schalen getragen, so daß ein anschließendes Ausheben der Bordwand in vertikaler Richtung möglich ist.

Weitere Vorteile und Merkmale der Erfindung ergeben sich aus dem folgenden, in den Zeichnungen perspektivisch dargestellten Ausführungsbeispiel eines Scharniers. Es zeigen:

Fig. 1 eine Darstellung des Scharniers an einem Fahrzeugchassis mit hochgeschwenkter Bordwand;

Fig. 2 das Scharnier gemäß Fig. 1 bei heruntergeschwenkter Bordwand;

Fig. 3 das Scharnier gemäß Fig. 2 nach seitlicher Verschiebung der Bordwand;

Fig. 4 einen Querschnitt durch das Scharnier gemäß Fig. 2, wobei die Schnittebene durch den ersten Schwenkzapfen verläuft;

Fig. 5 die Ansicht gemäß Pfeil V in Fig. 2 und

Fig. 6 eine teilweise Darstellung der Ansicht gemäß Pfeil VI in Fig. 3.

Mit 1 ist in Fig. 1 eine Bordwand bezeichnet, die mit einem Scharnier 2 am Chassis 3 eines Nutzfahrzeugs, beispielsweise eines Lastkraftwagens befestigt ist. Das Scharnier 2 besteht aus einem ersten, an der Bordwand 1 befestigten Teil 4, welches einen ersten 5 und zweiten Schwenkzapfen 6 trägt, sowie einem zweiten, am Chassis 3 befestigten Teil 7, welches eine in einem Block 8 verlaufende Bohrung 9 sowie eine von dieser im Abstand angeordnete, nach oben offene Schale 10 trägt. Die Befestigung der Teile 4, 7 des Scharniers 2 an der Bordwand 1 bzw. dem Chassis 3 kann entweder durch Schweißung oder Schraubung oder Nietung erfolgen und ist im zeichnerischen Ausführungsbeispiel nicht näher dargestellt.

Die Schwenkzapfen 5, 6 sowie die Bohrung 9 und die offene Schale 10 sind zueinander fluchtend angeordnet.

Die beiden, das Scharnier 2 bildenden Teile 4, 7 sind vorzugsweise Gesenkschmiedestücke. Insbesondere das Teil 7 kann aber auch in Stahlguß ausgeführt werden.

Das Teil 4 des Scharniers 2 ist in der in Fig. 1 gezeigten hochgeschwenkten Stellung der Bordwand 1 gegenüber einem Aushängen in Richtung eines Pfeils 11 durch den in der Bohrung 9 befindlichen Schwenkzapfen 5 gesichert. Eine Arretierung des Teils 4 in axialer Richtung, d.h. in Richtung eines Pfeils 12, erfolgt durch einen Bund 13 des ersten Teils 4.

Der Bund 13 ist koaxial zu den Schwenkzapfen 5, 6 entlang eines Umfangteils angeordnet, läßt sich in Eingriff mit einer Ausnehmung 14 des zweiten Teils 7 bringen und besorgt dann mit einer seitlichen Begrenzungsfläche 18 gegenüber einer seitlichen Begrenzungsfläche 19 der Ausnehmung 14 die vorerwähnte axiale Arretierung.

Ein Steg 15 trägt die Schwenkzapfen 5, 6 und ist mit einer Grundplatte 16 verbunden, über die das erste Teil 4 an der Bordwand 1 befestigt ist.

Die Länge der Schwenkzapfen 5, 6 ist derart bemessen, daß im hochgeschwenkten Zustand der Bordwand 1 diese lediglich von dem in der Bohrung 9 befindlichen ersten Schwenkzapfen 5 getragen wird, während in dieser Stellung der zweite Schwenkzapfen 6 keine Funktion ausübt.

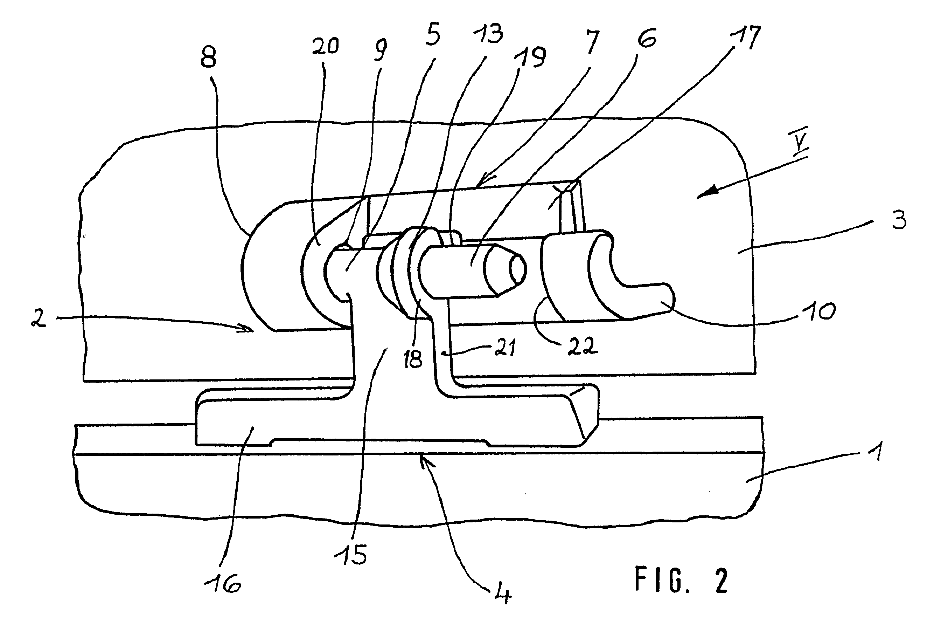

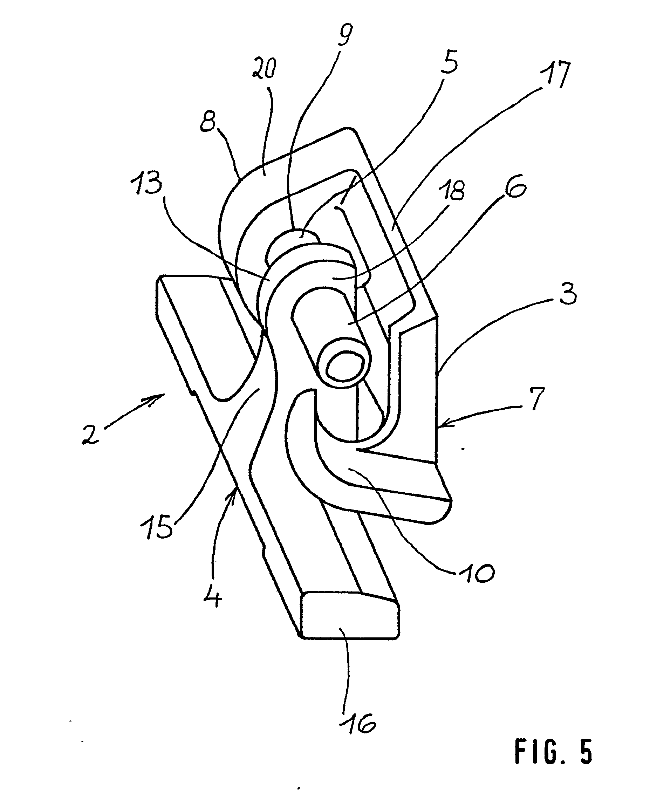

Die Fig. 2 bis 6 zeigen das Scharnier in Stellungen, in denen die Bordwand 1 heruntergeschwenkt ist. Es ist zu erkennen, daß der Bund 13, der in der hochgeschwenkten Stellung der Bordwand 1 und in einem sich von dort nach unten erstreckenden Schwenkwinkelbereich von z.B. 145° im Zusammenwirken mit der Ausnehmung 14 eine axiale Arretierung bewirkt, unterhalb dieses Schwenkwinkelbereichs eine axiale Verschiebung in Richtung des Pfeils 12 (Fig.1) zuläßt. Zu diesem Zweck ist der Bund 13 derart geformt, daß dessen äußere, entlang des Umfanges verlaufende Begrenzung einen Teil einer Kreislinie bildet mit einer geradlinigen Begrenzungslinie, die im heruntergeschwenkten Zustand des ersten Teils 4 parallel zu einer Montageplatte 17 des zweiten Teils 7 verläuft.

Es ist weiterhin zu erkennen, daß der an der der Bohrung 9 abgewandten Begrenzungsfläche 19 der Ausnehmung 14 mit seiner seitlichen Begrenzungsfläche 18 anliegende Bund 13 durch seine periphere Erstreckung denjenigen Schwenkwinkelbereich des Teils 4 bestimmt, während welchem eine axiale Verschiebung in Richtung des Pfeils 12 (Fig. 1) nicht möglich ist.

Der Steg 15 ist hinsichtlich seiner in axialer Richtung, d.h. in Richtung des Pfeils 12 (Fig. 1) erstreckenden Breite derart bemessen, daß diese im wesentlichen dem Abstand der Begrenzungsfläche 19 der Ausnehmung 14 von einer gegenüberliegenden seitlichen Begrenzungsfläche 20 des Blocks 8 entspricht. Durch diese Maßnahme ist die Bordwand 1 während des Eingriffs des Bundes 13 in die Ausnehmung 14 axial beidseitig arretiert. Der Bund 13 ist bezüglich des Steges 15 derart angeformt, daß eine dem zweiten Schwenkzapfen 6 zugewandte, seitliche, rechtwinklig zu den Längsachsen der Schwenkzapfen 5, 6 verlaufende Begrenzungsfläche 21 des Steges 15 mit der seitlichen Begrenzungsfläche 18 des Bundes 13 in einer gemeinsamen Ebene liegt. Auf diese Weise vergrößert sich bei einem axialen Verschieben des ersten Teils 4 in Richtung des Pfeils 12 (Fig. 1) die gegenüber einer seitlichen Begrenzungsfläche 22 der Schale 10 wirksame Anschlagfläche.

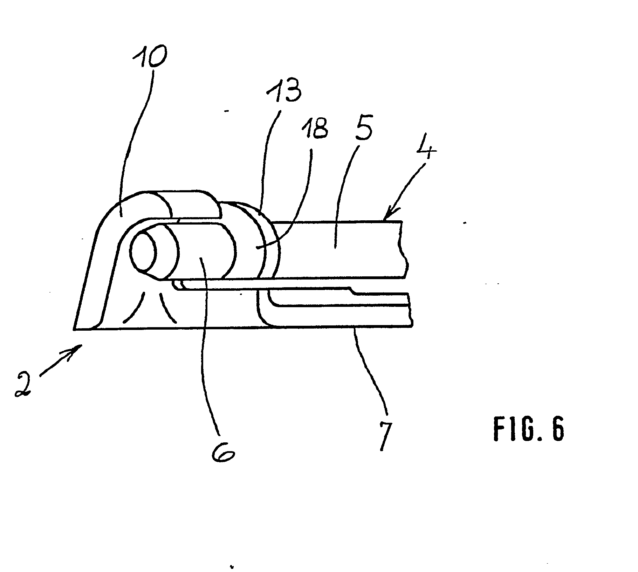

Die Fig. 3 und 6 zeigen das Scharnier 2 in einer heruntergeschwenkten Stellung, wobei außerdem die Bordwand 1 seitlich derart verschoben ist, daß der erste Schwenkzapfen 5 aus der Bohrung 9 vollständig herausgezogen ist und der zweite Schwenkzapfen 6 in der Schale 10 liegt. Nur in dieser Stellung besteht die Möglichkeit, die Bordwand 1 nach oben hin aus der Schale 10 herauszuheben. Es ist ersichtlich, daß insbesondere auch bei schrägstehendes Fahrzeug eine Sicherung gegenüber einem unbeabsichtigten Aushängen der Bordwand gegeben ist, da der Bund 13 und der Steg 15 im Zusammenwirken mit der Schale 10 eine seitliche, axiale Verschiebebewegung der Bordwand 1 in jedem Fall begrenzen.

**Patentansprüche**

1. Scharnier (2) mit Aushängesicherung zur schwenk- und lösbaren Anlenkung von Bordwänden (1) von Nutzfahrzeugen an deren Chassis (3), mit einem einen ersten Schwenkzapfen (5) mit waagerechter Längsachse tragenden, an der Bordwand (1) befestigten ersten Teil (4), mit einem den ersten Schwenkzapfen (5) aufnehmenden, an dem Chassis (3) befestigten zweiten Teil (7) und mit einem an dem ersten Teil (4) angeordneten, zu dem ersten Schwenkzapfen (5) koaxialen Bund (13), der sich auf einem Teil des Umfangs des ersten Schwenkzapfens (5) radial so weit über den ersten Schwenkzapfen (5) hinaus erstreckt, daß er in einem gegen das Aushängen der Bordwand (1) gesicherten Schwenkwinkelbereich des ersten Teils (4) in eine Ausnehmung (14) in dem zweiten Teil (7) eingreift, dadurch gekennzeichnet, daß das erste Teil (4) einen Zweiten Schwenkzapfen (6) mit waagerechter Längsachse aufweist,

daß - in Achsrichtung der Schwenkzapfen (5, 6) verlaufend - eine Bohrung (9) und eine nach oben offene Schale (10) des zweiten Teils (7) angeordnet sind, daß in einer ersten axialen Endstellung des ersten Teils (4) sich der erste Schwenkzapfen (5) in der Bohrung (9) befindet und das erste Teil (4) in seinem gegen des Aushängen gesicherten Schwenkwinkel gegenüber dem zweiten Teil (7) axial formschlüssig fixiert ist, und daß in einer zweiten axialen Endstellung des ersten Teils (4) der zweite Schwenkzapfen (6) in der Schale (10) liegt und der erste Schwenkzapfen (5) sich außerhalb der Bohrung (9) befindet.

2. Scharnier (2) nach Anspruch 1, dadurch gekennzeichnet, daß die Längsachsen der Schwenkzapfen (5, 6) miteinander fluchtend angeordnet sind.

3. Scharnier (2) nach Anspruch 1 oder 2, dadurch gekennzeichnet, daß die axial formschlüssige Fixierung des ersten Teils (4) gegenüber dem zweiten Teil (7) durch den in die Ausnehmung (14) eingeführten Bund (13) bewirkt ist.

4. Scharnier (2) nach einem der Ansprüche 1 bis 3, dadurch gekennzeichnet, daß der Bund (13) im Verbindungsbereich der Schwenkzapfen (5, 6) angeordnet ist.

5. Scharnier (2) nach einem der Ansprüche 1 bis 4, dadurch gekennzeichnet, daß im Verbindungsbereich der Schwenkzapfen (5, 6) ein Steg (15) angeformt ist, über den die Schwenkzapfen (5, 6) mit einer Grundplatte (16) des ersten Teils (4) in Verbindung stehen.

6. Scharnier (2) nach Anspruch 5, dadurch gekennzeichnet, daß eine dem zweiten Schwenkzapfen (6) zugewandte Begrenzungsfläche (21) des Steges (15) und eine dem zweiten Schwenkzapfen (6) zugewandte Begrenzungsfläche (18) des Bundes (13) in einer zu den Längsachsen der Schwenkzapfen (5, 6) rechtwinkligen, gemeinsamen Ebene liegen.

7. Scharnier (2) nach Anspruch 6, dadurch gekennzeichnet, daß die Breite des Steges (15) - in Richtung der Längsachsen der Schwenkzapfen (5, 6) gesehen - im wesentlichen dem Abstand einer der Schale (10) des zweiten Teils (7) zugewandten Begrenzungsfläche (19) der Ausnehmung (14) von der den ersten Schwenkzapfen (5) aufnehmenden Bohrung (9) entspricht.

8. Scharnier (2) nach einem der Ansprüche 1 bis 7, dadurch gekennzeichnet, daß der Abstand zwischen rechtwinklig zu den Längsachsen der Schwenkzapfen (5, 6) verlaufenden und einander zugewandten Begrenzungsflächen (22; 20) der Schale (10) einerseits und eines die Bohrung (9) definierenden Blocks (8) andererseits kleiner als das Maß zwischen den freien Enden der Schwenkzapfen (5, 6) ist, und daß dieser Abstand größer ist als das Maß zwischen der der Schale (10) zugewandten seitlichen Begrenzungsfläche (18) des Bundes (13) und dem freien Ende des der Bohrung (9) zugewandten ersten Schwenkzapfens (5).

**Claims**

1. Hinge joint with securement against removal for the pivotable and detachable connection of side and tail boards (1) of commercial vehicles to their chassis (3), with a first part (4) secured to the side or tail board (1) and carrying a first pivot pin (5) with a horizontal longitudinal axis, with a second part (7) secured to the chassis (3) and receiving the first pivot pin (5) and with a collar (13) coaxial to the first pivot pin (5) and arranged on the first part (4), which collar extends radially beyond the first pivot pin (5) over a part of the periphery of the first pivot pin (5) so that, in a pivot angle region of the first part (4) secured against removal of the side or tail board (1), it engages in a recess (14) in the second part (7), characterised in that the first part (4) includes a second pivot pin (6) with a horizontal longitudinal axis,
that, running in the axial direction of the pivot pins (5, 6), a bore (9) and an upwardly-open shell (10) of the second part (7) are arranged,
that, in a first axial end position of the first part (4), the first pivot pin (5) is located in the bore (9) and the first part (4) is axially positively fixed in its pivot angle secured against removal with respect to the second part (7),

and that, in a second axial end position of the first part (4), the second pivot pin (6) lies in the shell (10) and the first pivot pin (5) is located outside the bore (9).

2. Hinge joint (2) according to claim 1, characterised in that the longitudinal axes of the pivot pins (5, 6) are aligned with one another.

3. Hinge joint (2) according to claim 1 or 2, characterised in that the axially positive fixing of the first part (4) with respect to the second part (7) is effected by the collar (13) being lodged in the recess (14).

4. Hinge joint (2) according to any of claims 1 to 3, characterised in that the collar (13) is arranged in the connection region of the pivot pins (5, 6).

5. Hinge joint (2) according to any of claims 1 to 4, characterised in that a web (15) is provided in the connection region of the pivot pins (5, 6), by means of which the pivot pins (5, 6) are connected to a baseplate (16) of the first part (4).

6. Hinge joint (2) according to claim 5, characterised in that a limiting surface (21) of the web (15) facing the second pivot pin (6) and a limiting surface (18) of the collar (13) facing the second pivot pin (6) lie in a common plane perpendicular to the longitudinal axes of the pivot pins (5, 6).

7. Hinge joint (2) according to claim 6, characterised in that the width of the web (15), in the direction of the longitudinal axes of the pivot pins (5, 6), corresponds essentially to the distance of a limiting surface (19) of the recess (14) facing the shell (10) of the second part (7) from the bore (9) receiving the first pivot pin (5).

8. Hinge joint (2) according to any of claims 1 to 7, characterised in that the distance between mutuallyfacing limiting surfaces (22; 20) perpendicular to the longitudinal axes of the pivot pins (5, 6) on the shell (10) on the one hand and on a block (8) defining the bore (9) on the other hand is smaller than the dimension between the free ends of the pivot pins (5, 6) and that this distance is greater than the dimension between the lateral limiting surface (18) of the collar (13) facing the shell (10) and the free end of the first pivot pin (5) facing the bore (9).

## Revendications

1. Charnière (2) avec dispositif de sécurité contre le dégondage, servant à monter, avec possibilité de pivotement et d'enlèvement, un panneau de paroi latérale (1) sur le châssis (3) d'un véhicule industriel, comprenant une première partie (4) portant un premier pivot (5) à axe horizontal, une seconde partie (7) fixée au châssis et recevant le premier pivot (5), et un saillant (13) porté par la première partie (4) et coaxial au premier pivot (5), ce saillant (13) s'étendant radialement sur une partie de la périphérie du premier pivot (5) en faisant saillie par rapport à celui-ci jusqu'à pénétrer dans un évidement (14) de la seconde partie (7) quand ladite première partie (4) se trouve dans une plage angulaire de pivotement dans laquelle l'enlèvement du panneau de paroi (1) est impossible, caractérisée en ce que:

. la première partie (4) porte un second pivot (6) à axe horizontal;

. un perçage (9) et une coquille de coussinet (10) ouverte vers le haut sont portés par la seconde partie (7) et s'étendent dans la direction des axes longitudinaux des pivots (5, 6);

. dans une première position axiale extrême de la première partie (4), le premier pivot (5) se trouve dans le perçage (9), et cette première partie (4) est immobilisée dans le sens de l'axe par rapport à la seconde partie (7) par l'effet des formes géométriques quand ladite première partie (4) se trouve dans une plage angulaire de pivotement dans laquelle l'enlèvement du panneau de paroi (7) est impossible; et

. dans une seconde position axiale extrême de la première partie (4), le second pivot (6) repose dans le coquille de coussinet (10) et le premier pivot (5) est sorti du perçage (9).

2. Charnière (2) selon la revendication 1, caractérisée en ce que les axes longitudinaux des pivots (5, 6) sont mutuellement alignés.

3. Charnière (2) selon la revendication 1 ou 2, caractérisée en ce que l'immobilisation dans le sens de l'axe, par l'effet des formes géométriques, de la première partie (4) par rapport à la seconde partie (7), est produite par la pénétration du saillant (13) dans l'évidement (14).

4. Charnière (2) selon l'une des revendications 1 à 3, caractérisée en ce que le saillant (13) est disposé dans la region de jonction des pivots (5, 6).

5. Charnière (2) selon l'une des revendications 1 à 4, caractérisée en ce qu'il est prévu, dans la région de jonction des pivots (5, 6), un bras (15) par l'intermédiaire duquel les pivots (5, 6) sont reliés à une plaque de base (16) de la première partie (4).

6. Charnière (2) selon la revendication 5, caractérisée en ce qu'une surface de limitation (21) du bras (15), tournée vers le second pivot (6) et une surface de limitation (18) du saillant (13), tournée vers le second pivot (6), sont situées dans un plan commun orthogonal aux axes longitudinaux des pivots (5, 6).

7. Charnière (2) selon la revendication 6, caractérisée en ce que la largeur du bras (15), dans la direction des axes longitudinaux des pivots (5, 6), correspond sensiblement à l'écartement entre une surface de limitation (19), de l'évidement (14), tournée vers la coquille de coussinet (10) de la seconde partie (7), et le perçage (9) recevant le premier pivot (5).

8. Charnière (2) selon l'une des revendications 1 à 7, caractérisée en ce que l'écartement entre des surfaces de limitation (22, 20) dirigées perpendiculairement aux axes longitudinaux des pivots (5, 6) et tournées l'une vers l'autre, de la coquille de coussinet (10) d'une part et d'un bloc (8) définissant le perçage (9) d'autre part, est plus petit que la distance entre les extrémités libres des pivots (5, 6), et en ce que cet écartement est plus grand que la distance entre la surface de limitation (18) latérale du saillant (13), tournée vers la coquille de coussinet (10), et l'extrémité libre du premier pivot (5), dirigé vers le perçage (9).

FIG. 1

0 127 011

FIG. 2

0 127 011

FIG. 3

0 127 011

FIG. 4

0127011

FIG. 5

FIG. 6